(19) Europäisches Patentamt
European Patent Office
Office européen des brevets

(11) **EP 2 495 889 A1**

(12) **EUROPEAN PATENT APPLICATION**
published in accordance with Art. 153(4) EPC

(43) Date of publication:
**05.09.2012 Bulletin 2012/36**

(21) Application number: **10826555.4**

(22) Date of filing: **19.10.2010**

(51) Int Cl.:
**H04B 10/02** *(2006.01)*  **H04B 10/04** *(2006.01)*
**H04B 10/06** *(2006.01)*  **H04B 10/14** *(2006.01)*
**H04B 10/18** *(2006.01)*  **H04B 10/26** *(2006.01)*
**H04B 10/28** *(2006.01)*

(86) International application number:
**PCT/JP2010/068339**

(87) International publication number:
**WO 2011/052423 (05.05.2011 Gazette 2011/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2009 JP 2009249052**

(71) Applicant: **Mitsubishi Electric Corporation Tokyo 100-8310 (JP)**

(72) Inventors:
• **MIZUOCHI, Takashi**
  **Tokyo 100-8310 (JP)**
• **SUGIHARA, Takashi**
  **Tokyo 100-8310 (JP)**

(74) Representative: **Pfenning, Meinig & Partner GbR Patent- und Rechtsanwälte Theresienhöhe 13 80339 München (DE)**

(54) **PRE-EQUALISATION OPTICAL TRANSMITTER AND PRE-EQUALISATION OPTICAL FIBRE TRANSMISSION SYSTEM**

(57)    Provided is a pre-equalization optical transmitter capable of generating a pre-equalized RZ-type optical signal with a simple and low-cost structure. Further provided is a pre-equalization optical fiber transmission system in which dispersion is appropriately managed by using the pre-equalization optical transmitter. The pre-equalization optical transmitter includes: an RZ conversion circuit (11) for generating an RZ-type input data sequence based on an NRZ-type input data sequence (D (t)) and a clock (p (t)) that is twice the speed of the NRZ-type input data sequence; a digital filter (12) for generating pre-equalized data by a convolution operation between the RZ-type input data sequence and a desired transfer function corresponding to the wavelength dispersion of an optical fiber transmission path; D/A converters (13a, 13b) for performing D/A conversion on the pre-equalized data to output analog pre-equalized data; and a vector modulator (15) for modulating light from a laser light source (14) based on the analog pre-equalized data to output an RZ-type optical signal.

FIG.1

EP 2 495 889 A1

**Description**

Technical Field

The present invention relates to a pre-equalization optical transmitter for transmitting an optical signal in which wavelength dispersion of an optical fiber transmission path is pre-equalized, and a pre-equalization optical fiber transmission system using the pre-equalization optical transmitter.

Background Art

In an optical fiber transmission system, a distortion in a signal waveform due to wavelength dispersion of an optical fiber transmission path needs to be compensated for. As a method of compensating for the dispersion, there is widely practiced a method using a dispersion compensating fiber having wavelength dispersion of an opposite sign to the optical fiber transmission path. Further, with a recent 40-Gb/s or more high-speed optical fiber transmission system, the signal waveform is easily distorted by a slight change in a wavelength dispersion amount due to temperature, fiber insertion, or the like. Therefore, instead of a dispersion compensating fiber with a fixed wavelength dispersion amount, a variable dispersion compensator capable of variably setting the wavelength dispersion amount has been used.

As the variable dispersion compensator, there has been known a variable dispersion compensator that employs a pre-equalization method. In the pre-equalization method, digital filter having a transfer function $h^{-1}(t)$, which is an inverse of a transfer function $h(t)$ of the optical fiber transmission path, is provided on the transmission side, and a convolution operation is performed between an input data sequence $D(t)$ and the transfer function $h^{-1}(t)$ (see, for example, Non Patent Literature 1).

This method is called pre-equalization (or pre-distortion or pre-coding) because, in order to obtain a received signal waveform without any distortion after passing through the optical fiber transmission path, the distortion is previously equalized on the transmission side.

The pre-equalization method is electrically performed by using the digital filter, a digital/analog converter (D/A converter), and a vector modulator. The digital filter is realized by a finite impulse response (FIR) filter including a lookup table. The electric signal computed by the FIR filter is converted to an analog signal by the D/A converter, and optical quadrature modulation is performed by the vector modulator. As a result, it is possible to generate an optical signal having such a complex electric field that the distortion in the signal waveform due to the wavelength dispersion is compensated for after passing through the optical fiber transmission path.

When there is no wavelength dispersion, the vector modulator operates as a data modulator that is used in normal optical modulation. The pre-equalization is applicable not only to on-off keying but also to phase-shift keying. Note that, a type of the optical signal targeted by the above-mentioned pre-equalization method is a non-return to zero (NRZ) type, which is used for a general optical fiber transmission system.

On the other hand, in an ultra long distance optical fiber transmission system such as an optical submarine cable system, for the purpose of reducing crosstalk due to cross phase modulation of the optical fiber and other such purposes, an optical signal of a return to zero (RZ) type is used. In view of this, in order that pre-equalization can be applied to the ultra long distance optical fiber transmission system, a consideration is given to generating a pre-equalized RZ-type optical signal. In order to generate the pre-equalized RZ-type optical signal, it is conceivable to connect an optical modulator called a pulse carver for converting the NRZ-type optical signal to the RZ-type optical signal in series in a subsequent stage of the digital filter, the D/A converter, and the vector modulator for modulating a general NRZ-type input data sequence $D(t)$ to the NRZ-type optical signal.

However, even when the pulse carver is placed in the subsequent stage of the vector modulator, the pre-equalization over the temporal axis is already applied by the digital filter. Therefore, there has been a problem in that further modulation on the temporal axis cannot be applied, and that the RZ-type optical signal cannot be generated.

In order to solve the above-mentioned problem, there has been proposed a method of combining both side bands by using a high frequency mixer (see, for example, Non Patent Literature 2).

According to this method, instead of applying modulation on the temporal axis, modulation is applied in the frequency region to convert the NRZ-type optical signal to the RZ-type optical signal.

Further, in the ultra long distance optical fiber transmission system such as the optical submarine cable system, a dispersion management method is employed so as to compensate for the wavelength dispersion to some extent by the optical fiber transmission path itself, and to obtain the best transmission characteristics. For example, fibers specified in ITU-T G.655 (non-zero dispersion-shifted fibers) are used for two sections of the optical fiber transmission path, a fiber specified in ITU-T G.652 (single mode fiber with zero dispersion at 1.3 $\mu$m) is used for the subsequent one section. The three sections are repeated to cancel negative wavelength dispersion accumulated in the G.655 fibers by positive wavelength dispersion of the G. 652 fiber. However, detailed research has not been conducted yet on the dispersion management in a case where pre-equalization is applied to the ultra long distance optical fiber transmission system.

Citation List

Non Patent Literature

[Non Patent Literature 1] : M. M. El Said, J. Sitch, M. I. Elmasry, "An Electrically Pre-Equalized 10-Gb/s Duobinary Transmission System", IEEE Journal of Lightwave Technology, Vol. 23, No. 1, pp. 388-400, Jan 2005
[Non Patent Literature 2]: R. I. Killey, "Mitigation of Transmission Impairments in Long-Haul Submarine Links Using DSP-Based Electronic Predistortion", IEEE LEOS Summer Topicals 2008, WD 2.1, pp. 243-244

Summary of Invention

Technical Problems

However, the conventional technologies have the following problems.
According to the combining method disclosed in Non Patent Literature 2 described above, the pre-equalized RZ-type optical signal can be generated, but a precision analog circuit including at least four high frequency mixers, six high frequency adders, and four high frequency delay elements is required. Therefore, there is a problem in that all of the circuit size, the power consumption, and the cost increase.
Further, when pre-equalization is directly applied to the ultra long distance optical fiber transmission system, 100% of the dispersion compensation needs to be performed on the transmission side. In this case, there is a problem in that the transmission characteristics deteriorate due to nonlinearity of the optical fiber.
The present invention has been made to solve the above-mentioned problems, and therefore has an object to obtain a pre-equalization optical transmitter capable of generating a pre-equalized RZ-type optical signal with a simple and low-cost structure, and to obtain a pre-equalization optical fiber transmission system in which dispersion is appropriately managed by using the pre-equalization optical transmitter.

Solution to Problem

A pre-equalization optical transmitter of the present invention is a pre-equalization optical transmitter for transmitting an optical signal in which wavelength dispersion of an optical fiber transmission path is pre-equalized, including: RZ conversion means for generating an RZ-type input data sequence based on an NRZ-type input data sequence and a clock that is twice a speed of the NRZ-type input data sequence; pre-equalized data generation means for generating pre-equalized data by a convolution operation between the RZ-type input data sequence and a desired transfer function corresponding to the wavelength dispersion of the optical fiber transmission path; D/A conversion means for performing D/A conversion on the pre-equalized data to output analog pre-equalized data; and light modulation means for modulating light from a light source based on the analog pre-equalized data to output an RZ-type optical signal.
Further, the pre-equalization optical fiber transmission system of the present invention is a pre-equalization optical fiber transmission system in which a transmitting station including the above-mentioned pre-equalization optical transmitter and a receiving station are connected to each other via an optical fiber transmission path, the receiving station including dispersion compensating means for compensating for wavelength dispersion that is approximately half of the wavelength dispersion of the optical fiber transmission path, the pre-equalization optical transmitter compensating for the remaining half of the wavelength dispersion of the optical fiber transmission path.

Advantageous Effects of Invention

According to the pre-equalization optical transmitter of the present invention, the RZ conversionmeans generates an RZ-type input data sequence based on an NRZ-type input data sequence and a clock that is twice a speed of the NRZ-type input data sequence. The pre-equalized data generation means generates pre-equalized data by a convolution operation between the RZ-type input data sequence and a desired transfer function corresponding to the wavelength dispersion of the optical fiber transmission path. Further, the D/A conversion means performs D/A conversion on the pre-equalized data to output analog pre-equalized data, and light modulation means modulates light from a light source based on the analog pre-equalized data to output an RZ-type optical signal.
Therefore, there can be obtained the pre-equalization optical transmitter capable of generating the pre-equalized RZ-type optical signal with the simple and low-cost structure.
Further, according to the pre-equalization optical fiber transmission system of the present invention, the receiving station includes the dispersion compensating means for compensating for the wavelength dispersion that is approximately half of the wavelength dispersion of the optical fiber transmission path, and the pre-equalization optical transmitter included in the transmitting station compensates for the remaining half of the wavelength dispersion of the optical fiber transmission path.

With this configuration, it is possible to obtain good transmission characteristics, and to obtain the pre-equalization optical fiber transmission system in which dispersion is appropriately managed.

Brief Description of Drawings

[FIG. 1] FIG. 1 is a configuration diagram illustrating a pre-equalization optical transmitter according to a first embodiment of the present invention.
[FIG. 2] FIG. 2 is a configuration diagram illustrating a pre-equalization optical fiber transmission system according to the first embodiment of the present invention.

Description of Embodiment

Hereinafter, a preferred embodiment of a pre-equalization optical transmitter and a pre-equalization optical fiber transmission system of the present invention is described with reference to the accompanying drawings. Throughout the drawings, the same or corresponding parts are denoted by the same reference symbols for description.

Embodiment 1

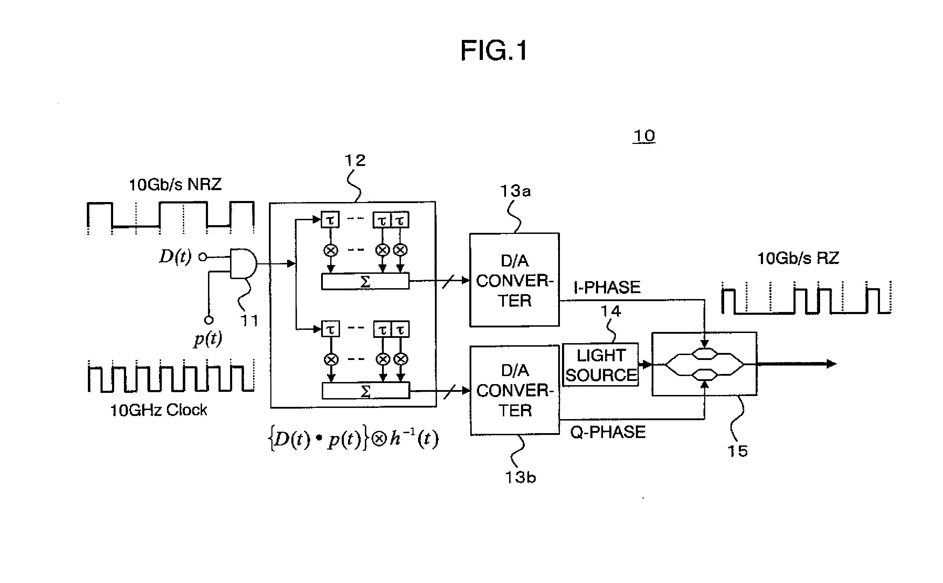

FIG. 1 is a configuration diagram illustrating a pre-equalization optical transmitter 10 according to a first embodiment of the present invention. The pre-equalization optical transmitter 10 transmits an optical signal in which wavelength dispersion of an optical fiber transmission path is pre-equalized.
In FIG. 1, the pre-equalization optical transmitter 10 includes an RZ conversion circuit (RZ conversion means) 11, a digital filter (pre-equalized data generation means) 12, D/A converters (D/A conversion means) 13a and 13b, a laser light source 14, and a vector modulator (light modulation means) 15.
Next, functions of the parts of the pre-equalization optical transmitter 10 are described.
The RZ conversion circuit 11 includes an AND circuit. To the RZ conversion circuit 11, a 10-Gb/s NRZ-type input data sequence D(t) and a 10-GHz clock p(t) are input, and an RZ-type input data sequence is generated.
In this case, the 10-GHz clock p(t), which takes two values of "0" and "1" in one cycle, can be regarded as a 20-Gb/s data sequence. In other words, the clock p(t) is a clock that is twice the speed of the input data sequence D(t) . Further, the RZ-type input data sequence output from the AND circuit can also be regarded as a 20-Gb/s data sequence.
Note that, the RZ conversion circuit 11 is not limited to the AND circuit, and another circuit may be used as long as the circuit converts the NRZ-type signal to the RZ-type signal.
The digital filter 12 includes, for example, a memory and is implemented by a look-up table having a function of an FIR filter. The digital filter 12 performs a convolution operation between the RZ-type input data sequence from the RZ conversion circuit 11 and a desired transfer function corresponding to the wavelength dispersion of the optical fiber transmission path to generate pre-equalized data, which is output as in-phase (I-phase) pre-equalized data and quadrature-phase (Q-phase) pre-equalized data.
Specifically, the digital filter 12 executes the operation expressed by Expression (1) below.
[Expression 1]

$$\{D(t) \bullet p(t)\} \otimes h^{-1}(t) \qquad (1)$$

In Expression (1), $h^{-1}(t)$ denotes a desired transfer function corresponding to the wavelength dispersion of the optical fiber transmission path (inverse function of a transfer function of the optical fiber transmission path), and $\otimes$ denotes convolution.
At this time, the RZ-type input data sequence input to the digital filter 12 is expanded in parallel at the processing speed of the look-up table. The digital filter 12 includes the same number of look-up tables as the parallel expansion number and generates the pre-equalized data based on the input data sequence expanded in parallel.

Note that, the digital filter 12 as a whole executes operation at a speed that is substantially twice or more higher than the RZ-type input data sequence in consideration of oversampling at the D/A converters 13a and 13b in the subsequent stage. Further, as described above, the RZ-type input data sequence is regarded as having twice the data amount as the NRZ-type input data sequence D(t), and hence the digital filter 12 executes the operation at a speed that is substantially four times (40 GHz) or more higher than the symbol rate of the NRZ-type input data sequence D(t).

The D/A converters 13a and 13b convert the I-phase pre-equalized data and the Q-phase pre-equalized data from the digital filter 12, which are digital signals, to analog signals, and output I-phase analog pre-equalized data and Q-phase analog pre-equalized data, respectively.

In this case, the D/A converters 13a and 13b operate, as with the digital filter 12, at a speed that is substantially four times (40 GHz) or more higher than the symbol rate of the NRZ-type input data sequence D(t).

The vector modulator 15 modulates laser light from the laser light source 14 based on the I-phase analog pre-equalized data and the Q-phase analog pre-equalized data from the D/A converters 13a and 13b, and outputs a pre-equalized 10-Gb/s RZ-type optical signal.

Note that, the 10-Gb/s RZ-type optical signal illustrated in FIG. 1 is exemplified as an optical signal in a case where the wavelength dispersion amount is 0 (that is, a case where the amount of pre-equalization is 0), but when the optical signal is pre-equalized, the waveform becomes such a complex waveform as that of noise on the temporal axis.

Further, in the first embodiment, the 10-Gb/s NRZ-type input data sequence D(t) has been described as an example. However, the present invention is not limited thereto, and similar effects can be obtained with a signal of any speed, as long as the RZ-type input data sequence is generated based on the NRZ-type input data sequence and the clock that is twice the speed of the NRZ-type input data sequence, and as long as the digital filter 12 and the D/A converters 13a and 13b execute the processing at a speed that is substantially four times or more higher than the symbol rate of the input data sequence D(t).

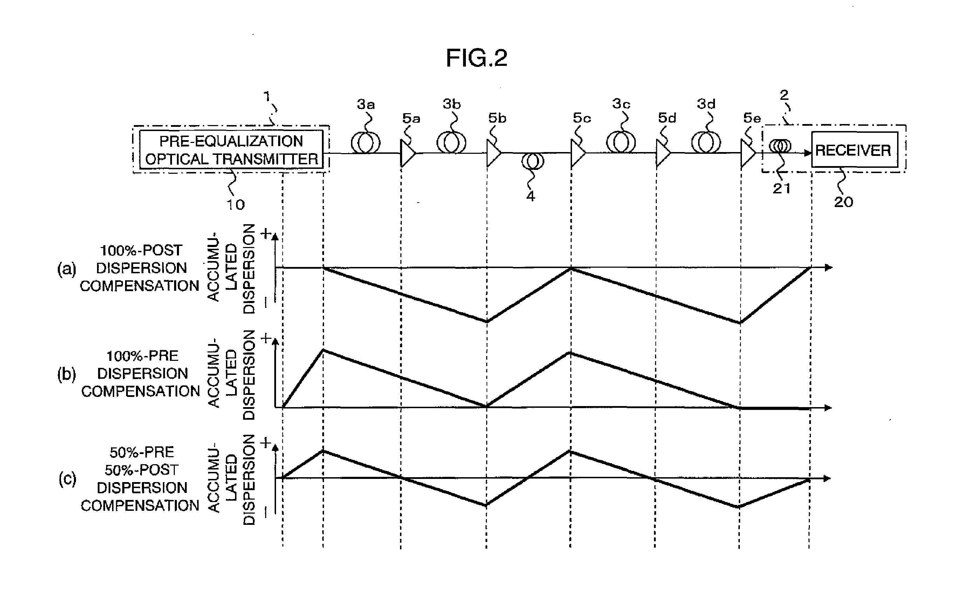

FIG. 2 is a configuration diagram illustrating the pre-equalization optical fiber transmission system according to the first embodiment of the present invention.

In FIG. 2, the pre-equalization optical fiber transmission system includes a transmitting station 1, a receiving station 2, negative dispersion transmission path optical fibers 3a to 3d, a positive dispersion transmission path optical fiber 4, and optical repeaters 5.

Further, the transmitting station 1 includes the pre-equalization optical transmitter 10 illustrated in FIG. 1, and the receiving station 2 includes a receiver 20 and a dispersion compensating fiber (dispersion compensating means) 21.

In this example, the negative dispersion transmission path optical fibers 3a to 3d, the positive dispersion transmission path optical fiber 4, and the optical repeaters 5 constitute the optical fiber transmission path.

Next, functions of the parts of the pre-equalization optical fiber transmission system are described.

As described above, the pre-equalization optical transmitter 10 transmits the optical signal in which the wavelength dispersion of the optical fiber transmission path is pre-equalized. The dispersion compensating fiber 21 has wavelength dispersion of an opposite sign to the optical fiber transmission path and performs dispersion compensation. The receiver 20 receives an optical signal which is compensated for dispersion by the dispersion compensating fiber 21.

The negative dispersion transmission path optical fibers 3a to 3d are optical fibers having negative wavelength dispersion, and the positive dispersion transmission path optical fiber 4 is an optical fiber having positive wavelength dispersion. The optical repeaters 5 connect the optical fibers to each other.

In the pre-equalization optical fiber transmission system illustrated in FIG. 2, with the transmission for two sections of the negative dispersion transmission path optical fibers and the transmission for one section of the positive dispersion transmission path optical fiber, the dispersion is managed so that the accumulated dispersion becomes 0.

In a case where the dispersion compensation is not performed by the pre-equalization optical transmitter 10 (that is, a case equivalent to the conventional optical transmitter with no pre-equalization), the negative wavelength dispersion is accumulated at the time when the optical signal arrives at the receiving station 2. Therefore, the accumulated dispersion is compensated for by the dispersion compensating fiber 21 having the positive wavelength dispersion. This is the 100%-post dispersion compensation illustrated in part (a) of FIG. 2.

Alternatively, in a case where all the wavelength dispersion of the optical fiber transmission path is compensated for by the pre-equalization optical transmitter 10, as illustrated in part (b) of FIG. 2, when large positive wavelength dispersion is applied by the pre-equalization optical transmitter 10, the receiving station 2 does not need to perform the dispersion compensation. This is referred to as 100%-pre dispersion compensation. In the past when the pre-equalization technology was unavailable, the dispersion compensating fiber was placed in the transmitting station 1 to realize the 100%-pre dispersion compensation. However, when the 100%-pre dispersion compensation is performed, it is known that, in a transmission state in which there is nonlinearity in the optical fiber, good transmission characteristics cannot be obtained.

Consequently, as illustrated in part (c) of FIG. 2, it is conceivable to compensate for approximately 50% of the wavelength dispersion of the optical fiber transmission path by the pre-equalization optical transmitter 10, and to compensate for the remaining 50% of the wavelength dispersion of the optical fiber transmission path by the receiving station 2. In this case, even in the transmission state in which there is nonlinearity in the optical fiber, relatively good transmission characteristics can be obtained.

Specifically, parameters of the digital filter 12 illustrated in FIG. 1 are set so that approximately 50% of the accumulated wavelength dispersion is compensated for by the pre-equalization optical transmitter 10. In addition, the dispersion compensating fiber 21 having a wavelength dispersion amount corresponding to the remaining approximately 50% of the wavelength dispersion is placed in the receiving station 2.

Note that, the pre-equalization optical fiber transmission system illustrated in FIG. 2 has been described by taking as an example the case where the negative dispersion transmission path optical fibers constitute two sections and the positive dispersion transmission path optical fiber constitutes one section. However, the present invention is not limited thereto, and similar effects can be obtained with an optical fiber transmission path having a different number of sections, or with an optical fiber transmission path in which the terms "negative" and "positive" are reversed.

Further, although the 50%-pre and 50%-post dispersion compensation has been described as an example, the present invention is not limited thereto, and similar effects can be obtained when the division is not exactly half/half but is, for example, 55%/45% or the like.

As described above, according to the pre-equalization optical transmitter of the first embodiment, the RZ conversion means generates the RZ-type input data sequence based on the NRZ-type input data sequence and the clock that is twice the speed of the NRZ-type input data sequence. Further, the pre-equalized data generation means generates the pre-equalized data by the convolution operation between the RZ-type input data sequence and the desired transfer function corresponding to the wavelength dispersion of the optical fiber transmission path. Further, the D/A conversion means performs D/A conversion on the pre-equalized data to output the analog pre-equalized data, and the light modulation means modulates the light from the light source based on the analog pre-equalized data to output the RZ-type optical signal.

Therefore, there can be obtained the pre-equalization optical transmitter capable of generating the pre-equalized RZ-type optical signal with the simple and low-cost structure.

Further, according to the pre-equalization optical fiber transmission system of the first embodiment, the receiving station includes the dispersion compensating means for compensating for the wavelength dispersion that is approximately half of the wavelength dispersion of the optical fiber transmission path, and the pre-equalization optical transmitter included in the transmitting station compensates for the remaining half of the wavelength dispersion of the optical fiber transmission path.

With this configuration, it is possible to obtain good transmission characteristics, and to obtain the pre-equalization optical fiber transmission system in which dispersion is appropriately managed.

Reference Signs List

1 transmitting station, 2 receiving station, 10 pre-equalization optical transmitter, 11 RZ conversion circuit (RZ conversionmeans), 12 digital filter (pre-equalized data generation means), 13a, 13b D/A converter (D/A conversion means), 14 laser light source, 15 vector modulator (light modulation means), 21 dispersion compensating fiber (dispersion compensating means).

**Claims**

1.  A pre-equalization optical transmitter for transmitting an optical signal in which wavelength dispersion of an optical fiber transmission path is pre-equalized, comprising:

    RZ conversion means for generating an RZ-type input data sequence based on an NRZ-type input data sequence and a clock that is twice a speed of the NRZ-type input data sequence;
    pre-equalized data generation means for generating pre-equalized data by a convolution operation between the RZ-type input data sequence and a desired transfer function corresponding to the wavelength dispersion of the optical fiber transmission path;
    D/A conversion means for performing D/A conversion on the pre-equalized data to output analog pre-equalized data; and
    light modulation means for modulating light from a light source based on the analog pre-equalized data to output an RZ-type optical signal.

2.  A pre-equalization optical transmitter according to claim 1, wherein the pre-equalized data generation means and the D/A conversion means operate at a speed that is substantially four times or more higher than a symbol rate of the NRZ-type input data sequence.

3. A pre-equalization optical fiber transmission system in which a transmitting station including the pre-equalization optical transmitter according to claim 1 or 2 and a receiving station are connected to each other via an optical fiber transmission path,
the receiving station including dispersion compensating means for compensating for wavelength dispersion that is approximately half of the wavelength dispersion of the optical fiber transmission path,
the pre-equalization optical transmitter compensating for the remaining half of the wavelength dispersion of the optical fiber transmission path.

# FIG.1

10

10Gb/s NRZ

$D(t)$

$p(t)$

11

10GHz Clock

12

τ τ ... τ

⊗ ⊗ ... ⊗

Σ

τ τ ... τ

⊗ ⊗ ... ⊗

Σ

$\{D(t) \cdot p(t)\} \otimes h^{-1}(t)$

13a  D/A CONVER-TER

13b  D/A CONVER-TER

I-PHASE

14  LIGHT SOURCE

Q-PHASE

15

10Gb/s RZ

# FIG.2

<table>
<tr><td colspan="2" align="center"><b>INTERNATIONAL SEARCH REPORT</b></td><td colspan="2">International application No.<br><br>PCT/JP2010/068339</td></tr>
</table>

| A. CLASSIFICATION OF SUBJECT MATTER |
|---|
| *H04B10/02*(2006.01)i, *H04B10/04*(2006.01)i, *H04B10/06*(2006.01)i, *H04B10/14* (2006.01)i, *H04B10/18*(2006.01)i, *H04B10/26*(2006.01)i, *H04B10/28*(2006.01)i |

According to International Patent Classification (IPC) or to both national classification and IPC

| B. FIELDS SEARCHED |
|---|
| Minimum documentation searched (classification system followed by classification symbols)<br>H04B10/02, H04B10/04, H04B10/06, H04B10/14, H04B10/18, H04B10/26, H04B10/28 |

| Documentation searched other than minimum documentation to the extent that such documents are included in the fields searched |
|---|
| Jitsuyo Shinan Koho     1922-1996   Jitsuyo Shinan Toroku Koho   1996-2010<br>Kokai Jitsuyo Shinan Koho   1971-2010   Toroku Jitsuyo Shinan Koho   1994-2010 |

| Electronic data base consulted during the international search (name of data base and, where practicable, search terms used)<br>IEEE Xplore, CiNii |
|---|

| C. DOCUMENTS CONSIDERED TO BE RELEVANT | | |
|---|---|---|
| Category* | Citation of document, with indication, where appropriate, of the relevant passages | Relevant to claim No. |
| Y | JP 2008-211493 A (Mitsubishi Electric Corp.), 11 September 2008 (11.09.2008), paragraphs [0005] to [0012]; fig. 2 (Family: none) | 1-3 |
| Y | JP 7-7475 A (NEC Corp.), 10 January 1995 (10.01.1995), column 9, lines 10 to 28; column 10, lines 9 to 13; fig. 4 (Family: none) | 1-3 |
| Y | KILLEY, Mitigation of transmission impairments in long-haul submarine links using DSP-based electronic predistortion, 2008 Digest of the IEEE/LEOS Summer Topical Meetings, 2008.07, p.243-244 | 1-3 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 December, 2010 (03.12.10) | Date of mailing of the international search report<br>14 December, 2010 (14.12.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| PCT/JP2010/068339 |

| C (Continuation). DOCUMENTS CONSIDERED TO BE RELEVANT |

| Category* | Citation of document, with indication, where appropriate, of the relevant passages | Relevant to claim No. |
|---|---|---|
| Y | JP 2009-188835 A (NEC Corp.),<br>20 August 2009 (20.08.2009),<br>paragraph [0052]; fig. 11<br>& US 2009/0202257 A1 & EP 2088698 A1 | 3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. M. EL SAID ; J. SITCH ; M. I. ELMASRY.** An Electrically Pre-Equalized 10-Gb/s Duobinary Transmission System. *IEEE Journal of Lightwave Technology,* January 2005, vol. 23 (1), 388-400

- **R. I. KILLEY.** Mitigation of Transmission Impairments in Long-Haul Submarine Links Using DSP-Based Electronic Predistortion. *IEEE LEOS Summer Topicals,* 2008, 243-244